# EUROPEAN PATENT SPECIFICATION

(11) **EP 2 581 965 B1**
(45) Date of publication and mention of the grant of the patent: **09.09.2015**
(21) Application number: 12159200.0
(22) Date of filing: 13.03.2012
(51) Int. Cl.: H01M 2/18, H01M 2/20, H01M 2/26, H01M 2/34, H01M 10/04

(54) **Rechargeable battery**
Wiederaufladbare Batterie
Batterie rechargeable

(30) Priority: 13.10.2011 US 201161546644 P; 23.02.2012 US 201213403066
(43) Date of publication of application: 17.04.2013
(73) Proprietor: Samsung SDI Co., Ltd., Gyeonggi-do (KR); Robert Bosch GmbH, 70442 Stuttgart (DE)
(72) Inventor: Kim, Duk-Jung, Yongin-si 446-711 (KR); Kim, In, Yongin-si 446-711 (KR); Lee, Chi-Young, Yongin-si 446-711 (KR); Kim, Joong-Heon, Yongin-si 446-711 (KR)
(74) Representative: Gulde & Partner

(56) References cited:
- EP-A1- 2 375 475
- EP-A1- 2 458 659
- US-A1- 2003 129 479
- US-A1- 2006 051 664
- US-A1- 2011 177 387
- US-A1- 2011 183 165

## Description

### FIELD OF THE INVENTION

The described technology relates generally to a rechargeable battery. More particularly, the described technology relates generally to a rechargeable battery of which a current collecting member is improved in structure.

### DESCRIPTION OF THE RELATED ART

A rechargeable battery can be repeatedly charged and discharged, unlike a primary battery that cannot be recharged.

A low-capacity rechargeable battery is used for a small portable electronic device such as a mobile phone, a laptop computer, and a camcorder. A large-capacity rechargeable battery is widely used as a power supply for driving a motor of a hybrid vehicle and the like.

Recently, a high-output rechargeable battery using a non-aqueous electrolyte solution with high energy density has been developed. The high-output rechargeable battery is configured of a large-capacity battery module in which a plurality of rechargeable batteries are connected to each other in series so as to be used to drive a motor of devices requiring large power, for example, an electric car, or the like.

The battery module is generally configured by the plurality of rechargeable batteries that are coupled with each other in series, and each of the rechargeable batteries may be formed in a cylindrical shape, a prismatic shape, and the like.

The above information disclosed in this Background section is only for enhancement of understanding of the background of the described technology and therefore it may contain information that does not form the prior art that is already known in this country to a person of ordinary skill in the art.
US 2003/129479 A1 discloses a battery that comprises a first current collecting member including a terminal connection portion and a side plate. Here, the side plate extending from only one lateral side surface of the terminal connection portion

### SUMMARY

The described technology has been made in an effort to provide a rechargeable battery improved in safety.

A rechargeable battery according to an exemplary embodiment includes
a plurality of electrode assemblies each comprising a first electrode, a second electrode, and a separator interposed between the first and second electrodes, each electrode having a coated and an uncoated region, a case for mounting the plurality of electrode assemblies therein, a cap plate for closing an opening in the case, a first terminal protruding through the cap plate and being electrically coupled to a first current collecting member; the first current collecting member mechanically and electrically coupling each first electrode of the plurality of electrode assemblies to the first terminal; the first current collecting member further comprises: a plurality of current collecting plates, each current collecting plate being fixed to an uncoated region of one of the plurality of first electrodes, and a plurality of supporting portions connecting neighboring current collecting plates, wherein the first current collecting member comprises a terminal connection portion comprising a fuse portion and side plates being bent downwards from lateral sides of the terminal connection portion and electrically coupling the plurality of current collecting plates to the first terminal.

The side plate extends from the lateral sides which are formed by being extended along a direction that crosses a width direction along which the fuse portion is extended. The side, where one of the side plates is bent from, is preferably disposed at an end of the fuse portion and/or wherein a protruded portion of the fuse portion and one of the side plates overlap.

A first current collecting plate preferably extends from the end of the bent portion of each of the side plates.

Preferably, a second current collecting plate is connected to the first current collecting plate via at least one supporting portion, preferably two supporting portions.

A first supporting portion may be formed in an upper portion of the first current collecting plate and/or a second supporting portion may be formed in the lower portion of the first current collecting plate.

The first or second supporting portion preferably comprises a connection portion extending from a side surface of the first current collecting member facing away from the plurality of electrode assemblies; and a guiding portion formed extending from the connection portion to the second current collecting plate.

Each first electrode comprises an inclined surface between its uncoated and its coated region, the guiding portion being in physical contact with the inclined surface. In other words, the guiding portion is in directed contact with the inclined surface. The guiding portions are preferably inclined with respect to the connection portion to closely attach to the inclined surface.

A current collecting plate may have a stepped profile with a welding bar and a bent bar formed at a lower end of welding bar and being inclined with respect to the welding bar, and an insertion tip formed at an end portion of the bent bar such that the insertion tip is not in contact with the first electrode. Preferably, the bent bar is inclined with an angle between 5° and 90° with respect to welding bar, more preferably below 90°.

The shortest distance between two adjacent welding bars is preferably greater than the shortest distance between two adjacent insertion tips.

A supporting portion may connect two adjacent insertion tips.

Insulating members are attached to portions of the first current collecting member facing the inside of the case.

Each of the side plates may comprise a protrusion such that the width of the side plate is larger than the width of the current collecting plates.

According to the exemplary embodiment, the supporting portion supports movement of the electrode assembly due to impact or vibration so that a short-circuit between the electrode assembly and the case can be prevented.

### BRIEF DESCRIPTION OF THE DRAWINGS

FIG. 1 is a perspective view of a rechargeable battery according to a first exemplary embodiment of the present invention.
FIG. 2 is a cross-sectional view of FIG. 1, taken along the line 11-11.
FIG. 3 is a perspective view of a current collecting member and a plurality of electrode assemblies of the rechargeable battery according to the first exemplary embodiment of the present invention.
Fig. 4 is top view of the first exemplary embodiment as shown in Fig. 3.
FIG. 5 is an exploded perspective view of a current collecting member and a plurality of electrode assemblies of the rechargeable battery according to the first exemplary embodiment of the present invention.
FIG. 6 is a perspective view of the current collecting member according to the first exemplary embodiment of the present invention.
FIG. 7 is a perspective view of a current collecting member of a rechargeable battery according to a second exemplary embodiment of the present invention.
FIG. 8 is a perspective view of a current collecting member of a rechargeable battery according to a third exemplary embodiment of the present invention.
FIG. 9 is a perspective view of a current collecting member of a rechargeable battery according to a fourth exemplary embodiment of the present invention.
FIG. 10 is a perspective view of a current collecting member of a rechargeable battery according to a fifth exemplary embodiment of the present invention.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention. Like reference numerals designate like elements throughout the specification and the drawings.

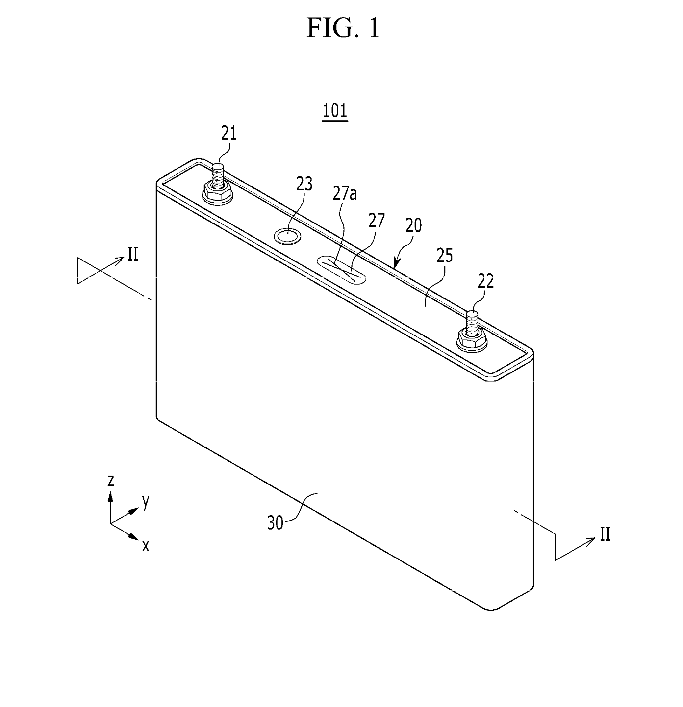

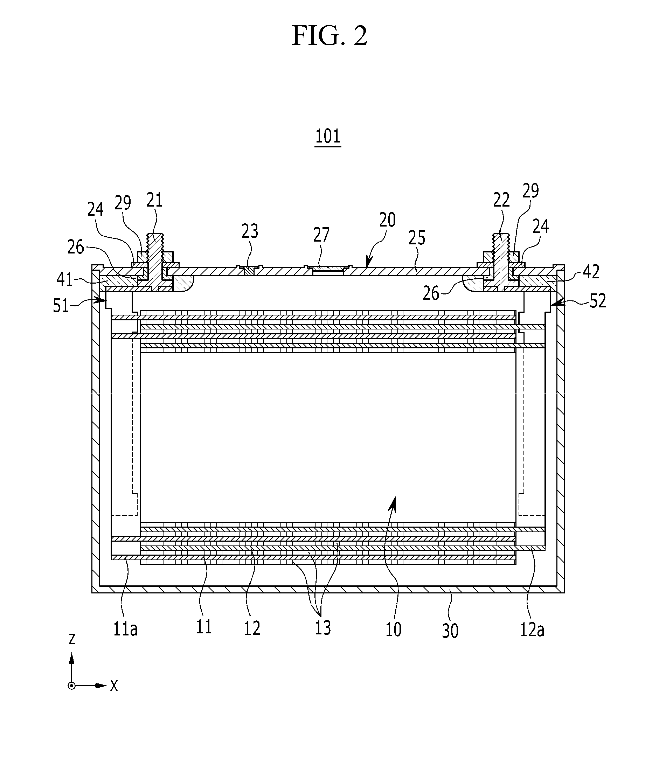

FIG. 1 is a perspective view of a rechargeable battery according to a first exemplary embodiment of the present invention and FIG. 2 is a cross-sectional view of FIG. 1, taken along the line II-II.

Referring to FIG. 1 and FIG. 2, a rechargeable battery 101 according to the first exemplary embodiment includes a plurality of electrode assemblies 10 formed by winding a positive electrode 11 and a negative electrode 12, interposing a separator 13 therebetween, a case 30 in which the electrode assembly 10 is installed, and a cap assembly 20 coupled to an opening of the case 30.

The rechargeable battery 101 according to the first exemplary embodiment is exemplarily described as a lithium ion secondary battery formed in the shape of a prism. However, the present invention is not limited thereof, and the present invention may be applied to various shapes of batteries such as a lithium polymer battery or a cylindrical battery.

The positive electrode 11 and the negative electrode 12 include coated regions where an active material is coated to a current collector formed of a thin metal foil and uncoated regions 11a and 12a where the active material is not coated.

The positive electrode uncoated region 11a is formed at a first side end of the positive electrode 11 along a length direction of the positive electrode 11, and the negative uncoated region 12a is formed at a second side end of the negative electrode 12 along a length direction of the negative electrode 12. The positive electrode 11 and the negative electrode 12 are spirally wound, interposing the separator 13 therebetween. Here, the separator 13 is an insulator.

However, the present invention is not limited thereto, and the electrode assembly 10 may have a structure where a positive electrode and a negative electrode, each formed of a plurality of sheets are alternately layered, interposing a separator therebetween.

The case 30 is approximately formed in the shape of a cuboid, and an opening is formed one side thereof. The cap assembly 20 includes a cap plate 25 covering the opening of the case 30, a positive terminal 21 protruding to an outer side of the cap plate 25 and electrically connected with the positive electrode 11, a negative terminal 22 protruding to an outer side of the cap plate 25 and electrically connected with the negative electrode 12, and a vent member 27 having a notch 27a formed to be broken according to a predetermined internal pressure.

The cap plate 25 is formed of a thin plate, and an electrolyte injection opening is formed at one side for injection of an electrolyte solution and a sealing cap 23 is fixed to the cap plate 25 to seal the electrolyte injection opening.

Since the positive terminal 21 is formed penetrating the cap plate 25, a first gasket 24 formed in an upper portion of the cap plate 25 and a second gasket 26 formed in a lower portion of the ca plate 25 insulate the cap plate 25 and the positive terminal 21.

The positive terminal 21 is formed in the shape of a circular cylinder, a nut 29 is formed in the positive terminal 21 to support the positive terminal 21 from an upper portion and a thread is formed in an external circumference of the positive terminal 21 so as to be fastened with the nut 29.

The positive terminal 21 is electrically connected with the positive electrode uncoated region 11a through a current collecting member 51, and a terminal flange that supports the positive terminal 21 and the current collecting member 51 is formed in a lower end of the positive terminal 21.

Since the negative terminal 22 is formed penetrating the cap plate 25, a first gasket 24 formed in an upper portion of the cap plate 25 and a second gasket 25 formed in a lower portion of the cap plate 25 insulate the cap plate 25 and the negative terminal 22.

The negative terminal 22 is formed in the shape of a circular cylinder, and a nut 29 is formed in the negative terminal 22 to support the negative terminal 22 from an upper portion thereof and a thread is formed in an external circumference of the negative terminal 22 so as to be fastened with the nut 29.

The negative terminal 22 is electrically connected with the negative electrode uncoated region 12a through a current collecting member 52, and a terminal flange is formed in a lower end of the negative terminal 22 to support the negative terminal 22 and the current collecting member 52.

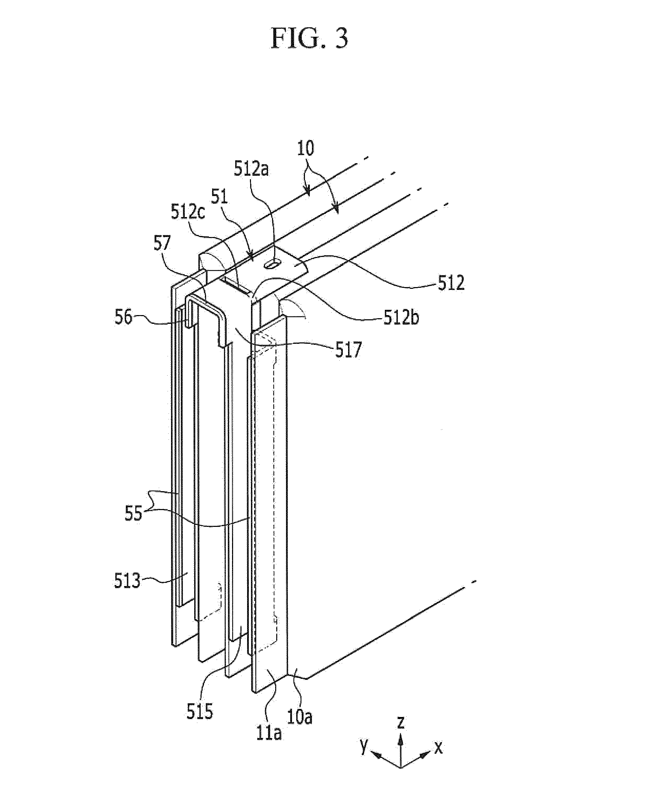

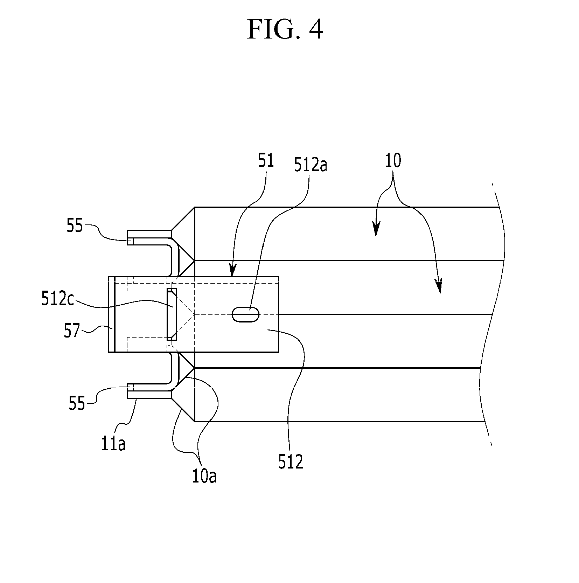

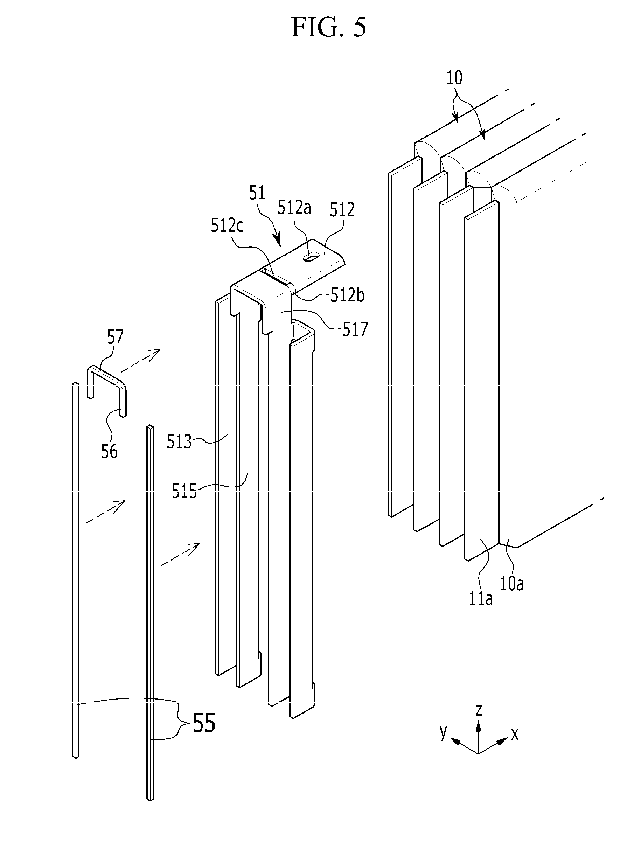

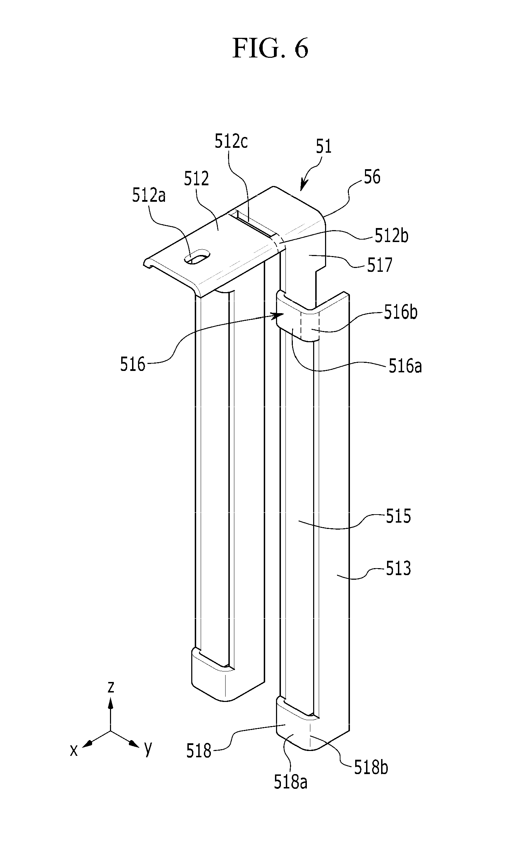

FIG. 3 is a perspective view of a current collecting member and a pluralities of electrode assemblies of the rechargeable battery according to the first exemplary embodiment of the present invention. Fig. 4 is top view of the first exemplary embodiment as shown in Fig. 3. FIG. 5 is an exploded perspective view of the current collecting member and the plurality of electrode assemblies of the rechargeable battery as shown in Fig. 3 according to the first exemplary embodiment of the present invention, and FIG. 6 is a perspective view of the current collecting member according to the first exemplary embodiment of the present invention.

Referring to FIG. 3, 4 5 and FIG. 6, the current collecting member 51 includes a terminal connection portion 512 fixed to the positive terminal 21, side plates 517 formed bent from the terminal connection portion 512, and current collecting plates 513 and 515 fixed to the positive electrode uncoated region 11 a. A fuse portion 512b having a smaller width than the periphery region is formed in the terminal connection portion 512. The side plates 517 are bent from the terminal connection portion 512 such that they are in parallel to the uncoated regions 11a of each of the electrode assemblies and bents from side surfaces of the terminal connection portion 512 formed in parallel to the uncoated regions 11a. In other words, each side plate 517 is bent from a longitudinal side surface of the terminal connection portion 512 being formed in parallel to the long side of the battery case 30 or the long side of the electrode assembly 10.

Since the current collecting member 52 formed in the negative terminal 22 is the same as the current collecting member 51 in structure, excluding the fuse portion 512b, a repeated description will be omitted.

The terminal connection portion 512 is formed in the shape of a square plate, and a hole 512a to which the positive terminal 21 is inserted is formed in a center thereof. Further, the terminal connection portion 512 is welded to the lower portion of the positive terminal 21. The fuse portion 512b has a smaller width than the periphery region, and thus a hole 512c is formed in the fuse portion 512b. The hole 512c is extended along a width direction (y-axis direction in FIG. 5) of the terminal connection portion 512. Ends of lateral sides the terminal connection portion 512 are bent downward such that the terminal connection portion 512 has an arc-shaped cross-section and portions protruding downward are formed in the ends of the lateral sides of the terminal connection portion 512. The hole 512c is formed in a center of the terminal connection portion 512, and the protruded portions are also formed in the fuse portion 512b. As in the present exemplary embodiment, when the portions protruding downward are formed in the ends of the lateral sides of the terminal connection portion 512, the protruded portions support height directional stress of the current collecting member 51 so that breakage of the fuse portion 512b due to the fatigue stress can be prevented.

Each side plate 517 is perpendicularly bent toward the bottom of the case 30 from a width directional end of the terminal connection portion 512. Accordingly, each side plate 517 is disposed in parallel with the wide front side of the case 30.

That is, each side plate 517 is bent at a corner formed by being extended along a direction (x-axis direction) that crosses the direction (y-axis direction) along which the fuse portion 512b is extended. The direction along which the fuse portion 512b is extended and the corner where then side plate 517 is bent may be perpendicularly crossed.

When each side plate 517 is bent at a length directional end of the terminal connection portion 512, vertical directional stress applied to the fuse portion 512b is increased so that the fuse portion 512b may be broken due to vibration or impact. Thus, for stable strength of the fuse portion 512b, the fuse portion 512b should have a large width. However, when the fuse portion 512b has a large width, the fuse 512b may not be melted when the amount of current is insufficient even though the short-circuit occurred.

However, when the side plate 517 is formed in the width directional end of the terminal connection portion 512 as in the present exemplary embodiment, the stress applied to the fuse portion 512b is decreased and thus the thickness of the fuse portion 512b can be reduced so that the fuse portion 512b can be activated with a small amount of current.

A current collecting plate 515 is formed by being extended from a lower portion of each of the side plates 517, and a current collecting plate 513 is fixed to the current collecting plate 515 using supporting portions 516 and 518. The current collecting plates 513 and 515 are formed in the shape of a long square, and they are welded to the positive electrode uncoated region 11 a.

The supporting portion 516 is formed in upper portions of the current collecting plates 513 and 515 for connection therebetween in a fixed manner and the supporting portion 518 is formed in lower portions of the current collecting plates 513 and 515 for connection therebetween in a fixed manner.

The supporting portion 516 provided in the upper portions of the current collecting plates 513 and 515 includes a connection portion 516a arranged opposite to the electrode assembly 10 and guiding portions 516b formed at lateral side ends of the connection portion 516a and then fixed to the current collecting plates 513 and 516. The guiding portions 516a are bent in the shape of an arc. Accordingly, the supporting portion 516 protrudes toward a direction (x-axis direction) facing the electrode assembly 10 from the current collecting plates 513 and 515. The connection portion 516a is formed in the shape of a square plate and the guiding plate 516b is formed of a curved plate having an arc-shaped cross-section.

The supporting portion 518 provided in the lower portions of the current collecting plates 513 and 515 includes a connection portion 518a arranged opposite to the electrode assembly 10 and guiding portions 518b formed at lateral side ends of the connection portion 518a and fixed to the current collecting plates 513 and 515. The guiding portions 518b are bent in the shape of an arc. Accordingly, the supporting portion 518 protrudes toward a direction (x-axis) facing the electrode assembly 10 from the current collecting plates 513 and 515. The connection portion 518a is formed in the shape of a square plate, and the guiding portion 518b is formed of a curved plate having an arc-shaped cross-section.

In the electrode assembly 10, the uncoated region where the active material is not coated is thinner than the coated region where the active material is coated, and therefore an inclined face 10a is formed in a portion where the uncoated region and the coated region are connected.

The guiding portions 516b and 518 contact the inclined face 10a formed in the electrode assembly 10 to prevent the electrode assembly 10 from moving due to impact and vibration. Movement of the electrode assembly 10 due to vibration may cause electrical contact failure between the current collecting member 51 and the positive electrode uncoated region 11a and electrical contact failure between the current collecting member 51 and the positive terminal 21. In addition, when the electrode assembly 10 is severally moved, the electrode assembly 10 contacts the case 30, thereby causing a short-circuit.

However, according to the present exemplary embodiment, the current collecting member 51 supports the electrode assembly 10 to prevent movement of the electrode assembly 10, and accordingly safety of the rechargeable battery 101 can be improved.

Further, the supporting portions 516 and 518 support the current collecting plates 513 and 515 to prevent the current collecting plates 513 and 515 from moving in a direction (y-axis direction) along which the electrode assembly 10 is layered. Thus, the electrical connection failure between the current collecting plates 513 and 515 and the positive electrode uncoated region 11 a can be prevented.

In the current collecting member 51, insulating members 55 and 57 are attached to portions facing the inside of the case 30. The current collecting member 51 includes a protrusion 56 protruding further to the outside than the current collecting plates 513 and 515 from the terminal connection portion 512 and the side plate 517. The insulating members 55 and 57 are formed as a tape type such that they are respectively attached to each end of the protrusion 56 and the current collecting plate 513.

As in the present exemplary embodiment, the insulating members 55 and 57 are provided to prevent short-circuit due to contact of the case 30 and the current collecting member 51.

As can be seen from Fig. 4, the insulating members 55 and 57 cover the side surfaces of the current collecting member 51 facing away from the electrode assembly 10 and facing toward an interior surface of the case 30. Furthermore, the uncoated regions 11a are in close contact with the current collecting plates, preferably they are arranged in direct physical contact parallel to each other.

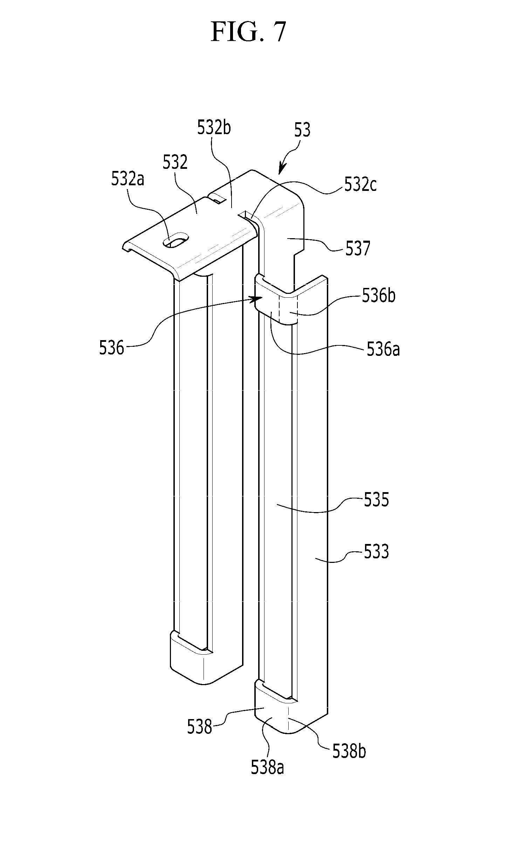

FIG. 7 is a perspective view of a current collecting member of a rechargeable battery according to a second exemplary embodiment of the present invention.

The rechargeable battery according to the present exemplary embodiment is the same as the rechargeable battery of the first exemplary embodiment of the present invention, excluding a structure of a current collecting member 53, and therefore no repeated description will be provided.

Referring to FIG. 7, the current collecting member 53 includes a terminal connection portion 532 fixed to a positive terminal 21, side plated 537 formed by being bent from the terminal connection portion 532, and current collecting plates 533 and 535 fixed to a positive electrode uncoated region 11a. In the terminal connection portion 532, a fuse portion 532b having a smaller width than the periphery region is formed.

The current collecting member provided in a negative terminal 22 is the same as the current collecting member 53 in structure, excluding the fuse portion 532b, and therefore no repeated description will be provided.

The terminal connection portion 532 is formed in the shape of a square plate, and a hole 532a to which the positive terminal 21 is inserted in formed in a center of the terminal connection portion 532. Further, the terminal connection portion 532 is welded to a lower portion of the positive terminal 21. The fuse portion 532b has a smaller width than the periphery region, and thus a hole 532c is formed in the fuse portion 532b. The hole 532c is formed extended to a side end of the terminal connection portion 532 from lateral side ends of the fuse portion 532b.

Each side plate 537 is perpendicularly bent toward the bottom of the case 30 from a width directional end of the terminal connection portion 532. Accordingly, each side plate 537 is disposed in parallel with a wide front side of the case 30.

That is, each side plate 537 is bent at a corner formed extended in a direction crossing a direction in which the fuse portion 512b is extended. The direction in which the fuse portion 532b is extended and the corner at which one of the side plate 537s is bent may be perpendicularly crossed with each other.

When each side plate 537 is bent at a length directional end of the terminal connection portion 532, a vertical directional stress applied to the fuse portion 532b is increased so that the fuse portion 532b may be broken due to vibration or impact.

However, when each side plate 537 is formed in the width directional end of the terminal connection portion 532 as in the present exemplary embodiment, the stress applied to the fuse 532b is decreased and thus the thickness of the fuse portion 532b may be decreased so that the fuse portion 532b may be activated with a small amount of current.

The current collecting plates 535 is formed by being extended from a lower portion of the current collecting side plate 537, and a current collecting plate 533 is formed in the current collecting plate 535 in a fixed manner using the supporting portions 536 and 538. The current collecting plates 533 and 535 are formed in the shape of a long square plate, and they are welded to the positive electrode uncoated region 11a.

The supporting portion 536 is formed in upper portions of the current collecting plates 533 and 535 for connection therebetween in a fixed manner and the supporting portion 538 is formed in lower portions of the current collecting plates 533 and 535 for connection therebetween in a fixed manner.

The supporting portion 536 provided in the upper portions of the current collecting plates 533 and 535 includes a connection portion 536a arranged opposite to the electrode assembly 10 and guiding portions 536b formed at lateral side ends of the connection portion 536a and then fixed to the current collecting plates 533 and 536. The guiding portions 536a are bent in the shape of an arc. Thus, the supporting portion 536 protrudes toward a direction facing the electrode assembly 10 from the current collecting plates 533 and 535. The connection portion 536a is formed in the shape of a square plate and the guiding plate 536b is formed of a curved plate having an arc-shaped cross-section.

The supporting portion 538 provided in the lower portions of the current collecting plates 533 and 535 includes a connection portion 538a arranged opposite to the electrode assembly 10 and guiding portions 538b formed at lateral side ends of the connection portion 538a and fixed to the current collecting plates 533 and 535. The guiding portions 538b are bent in the shape of an arc. Accordingly, the supporting portion 538 protrudes toward a direction facing the electrode assembly 10 from the current collecting plates 533 and 535. The connection portion 538a is formed in the shape of a square plate, and the guiding portion 538b is formed of a curved plate having an arc-shaped cross-section.

In the electrode assembly 10, an uncoated region where an active material is not coated is thinner than a coated region where the active material is coated, and therefore an inclined face 10a is formed in a portion where the uncoated region and the coated region are connected.

The guiding portions 536b and 538 contact the inclined face 10a formed in the electrode assembly 10 to prevent the electrode assembly 10 from moving due to impact and vibration.

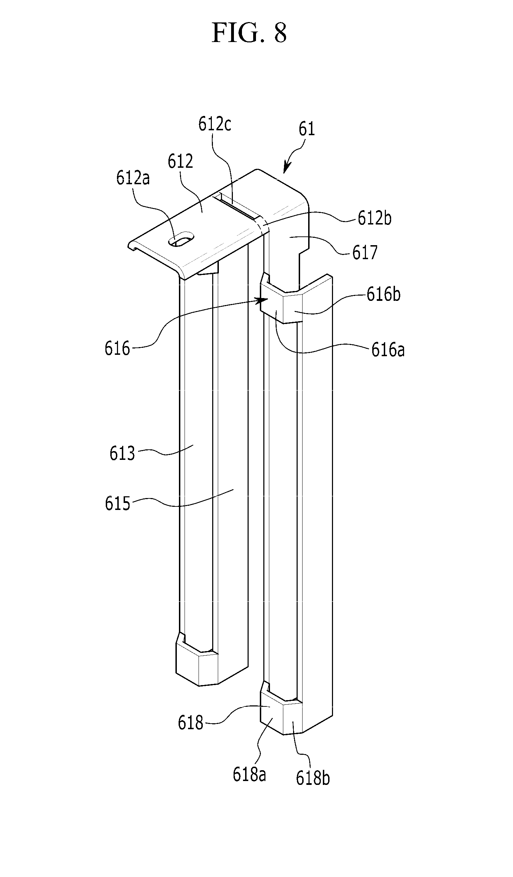

FIG. 8 is a perspective view of a current collecting member of a rechargeable battery according to a third exemplary embodiment of the present invention.

The rechargeable battery according to the present exemplary embodiment is the same as the rechargeable battery of the first exemplary embodiment of the present invention, excluding a structure of a current collecting member 61, and therefore no repeated description will be provided.

Referring to FIG. 8, the current collecting member 61 includes a terminal connection portion 612 fixed to a positive terminal 21, side plates 617 formed by being bent from the terminal connection portion 612, and current collecting plates 613 and 615 fixed to a positive electrode uncoated region 11a. In the terminal connection portion 612, a fuse portion 612b having a smaller width than the periphery region is formed.

The current collecting member provided in a negative terminal 22 is the same as the current collecting member 61 in structure, excluding the fuse portion 612b, and therefore no repeated description will be provided.

The terminal connection portion 612 is formed in the shape of a square plate, and a hole 612a to which the positive terminal 21 is inserted in formed in a center of the terminal connection portion 612. Further, the terminal connection portion 612 is welded to a lower portion of the positive terminal 21. The fuse portion 612b has a smaller width than the periphery region, and thus a hole 612c is formed in the fuse portion 612b. The hole 612c is extended in a width direction of the terminal connection portion 612. Ends of lateral sides the terminal connection portion 612 are bent downward such that the terminal connection portion 612 has an arc-shaped cross-section and portions protruding downward are formed in the ends of the lateral sides of the terminal connection portion 612. The hole 612c is formed in a center of the terminal connection portion 612, and the protruded portions are also formed in the fuse portion 612b.

Meanwhile, each side plate 617 is perpendicularly curved toward the bottom of the case 30 from a width directional end of the terminal connection portion 612. Thus, each side plate 617 is disposed in parallel with a wide front side of the case 30.

That is, each side plate 617 is bent at a corner formed by being extended along a direction that crosses the direction along which the fuse portion 612b is extended. The direction along which the fuse portion 612b is extended and the corner where then each side plate 617 is bent may be perpendicularly crossed.

When each side plate 617 is bent at a length directional end of the terminal connection portion 612, vertical directional stress applied to the fuse portion 612b is increased so that the fuse portion 612b may be broken due to vibration or impact.

However, when each side plate 617 is formed in the width directional end of the terminal connection portion 612 as in the present exemplary embodiment, the stress applied to the fuse portion 612b is decreased and thus the thickness of the fuse portion 612b can be reduced so that the fuse portion 612b can be activated with a small amount of current.

A current collecting plate 615 is formed by being extended from a lower portion of each side plate 617, and a current collecting plate 613 is fixed to the current collecting plate 615 using supporting portions 616 and 618. The current collecting plates 613 and 615 are formed in the shape of a long square, and they are welded to the positive electrode uncoated region 11a.

The supporting portion 616 is formed in upper portions of the current collecting plates 613 and 615 for connection therebetween in a fixed manner and the supporting portion 618 is formed in lower portions of the current collecting plates 613 and 615 for connection therebetween in a fixed manner.

The supporting portion 616 provided in the upper portions of the current collecting plates 613 and 615 includes a connection portion 616a disposed facing the electrode assembly 10 and extended in a direction toward the other current collecting plate 615 from one current collecting plate 613 and guiding portions 616b provided at lateral side ends of the connection portion 616a and fixed to the current collecting plates 613 and 615. The guiding portions 616b are inclined with respect to the connection portion 616a. Thus, the supporting portion 616 protrudes toward a direction facing the electrode assembly 10 from the current collecting plates 613 and 615. The connection portion 616a is formed in the shape of a square plate, and the guiding portions 616b are inclined with respect to the current collecting plates 613 and 615 and the connection portion 616a.

The supporting portion 618 provided in the lower portions of the current collecting plates 613 and 615 includes a connection portion 618a disposed facing the electrode assembly 10 and extended toward the other current collecting plate 615 from one current collecting plate 613 and guiding portions 618b provided at lateral side ends of the connection portion 618a and fixed to the current collecting plates 613 and 618. The guiding portions 618b are inclined with respect to the connection portion 618a. The supporting portion 618 is formed in the shape of a square plate, and the guiding portions 616b are inclined with respect to the current collecting plates 613 and 615 and the connection portion 616a. The connection portion 618a is formed in the shape of a square plate, and the guiding portions 618b are inclined with respect to the current collecting plates 613 and 615 and the connection portion 616a.

In the electrode assembly 10, an uncoated region where an active material is not coated is thinner than a coated region where the active material is coated, and therefore an inclined face 10a is formed in a portion where the uncoated region and the coated region are connected.

The guiding portions 616b and 618b matches in parallel with the inclined face 10a formed in the electrode assembly 10 and contact the same. The guiding portions 616b and 618b support the electrode assembly 10 in the inclined face 10a to prevent the electrode assembly 10 from moving due to impact or vibration. According to the present exemplary embodiment, the contact area between the guiding portions 616b and 681 b and the inclined face 10a is increased so that the guiding portions 616b and 618b can be further stably support the electrode assembly 10.

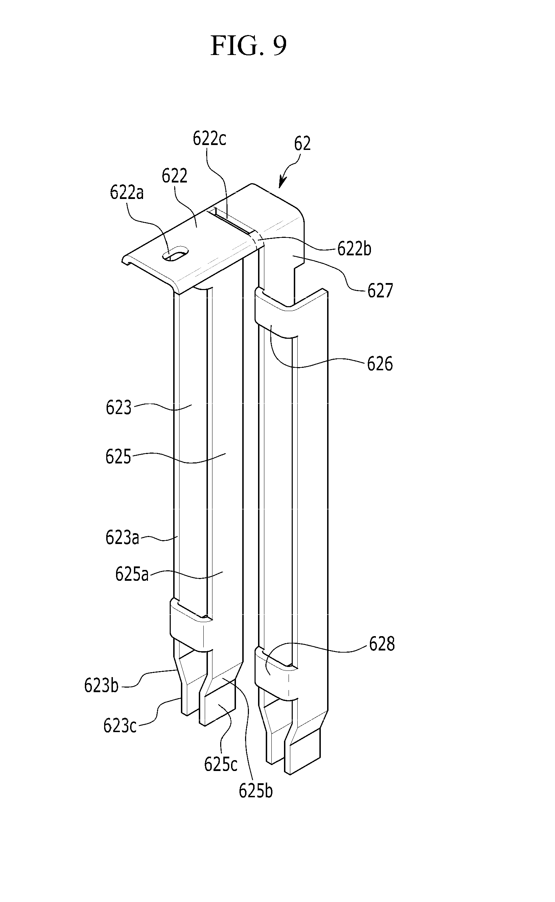

FIG. 9 is a perspective view of a current collecting member of a rechargeable battery according to a fourth exemplary embodiment of the present invention.

The rechargeable battery according to the present exemplary embodiment is the same as the rechargeable battery of the first exemplary embodiment of the present invention, excluding a structure of a current collecting member 62, and therefore no repeated description will be provided.

Referring to FIG. 9, the current collecting member 62 includes a terminal connection portion 622 fixed to a positive terminal 21, side plates 627 formed by being bent from the terminal connection portion 622, and current collecting plates 623 and 625 fixed to a positive electrode uncoated region 11a. In the terminal connection portion 622, a fuse portion 622b having a smaller width than the periphery region is formed.

The current collecting member provided in a negative terminal 22 is the same as the current collecting member 62 in structure, excluding the fuse portion 622b, and therefore no repeated description will be provided.

The terminal connection portion 622 is formed in the shape of a square plate, and a hole 622a to which the positive terminal 21 is inserted in formed in a center of the terminal connection portion 622. Further, the terminal connection portion 622 is welded to a lower portion of the positive terminal 21. The fuse portion 622b has a smaller width than the periphery region, and thus a hole 622c is formed in the fuse portion 622b. The hole 622c is extended in a width direction of the terminal connection portion 622. Ends of lateral sides the terminal connection portion 622 are bent downward such that the terminal connection portion 622 has an arc-shaped cross-section and portions protruding downward are formed in the ends of the lateral sides of the terminal connection portion 622. The hole 622c is formed in a center of the terminal connection portion 622, and the protruded portions are also formed in the fuse portion 622b.

Meanwhile, each side plate 627 is perpendicularly curved toward the bottom of the case 30 from a width directional end of the terminal connection portion 622. Thus, each side plate 627 is disposed in parallel with a wide front side of the case 30.

That is each side plate 627 is bent at a corner formed by being extended along a direction that crosses the direction along which the fuse portion 622b is extended. The direction along which the fuse portion 622b is extended and the corner where then each side plate 627 is bent may be perpendicularly crossed.

When each side plate 627 is bent at a length directional end of the terminal connection portion 622, vertical directional stress applied to the fuse portion 622b is increased so that the fuse portion 622b may be broken due to vibration or impact.

However, when each side plate 627 is formed in the width directional end of the terminal connection portion 622 as in the present exemplary embodiment, the stress applied to the fuse portion 622b is decreased and thus the thickness of the fuse portion 622b can be reduced so that the fuse portion 622b can be activated with a small amount of current.

A current collecting plate 625 is formed by being extended from a lower portion of each side plate 627, and a current collecting plate 623 is fixed to the current collecting plate 625 using supporting portions 626 and 628.

The current collecting plates 623 are formed in the shape of a long square plate, and includes a welding bar 623a welded to a positive electrode uncoated region 11a, a bent bar 623b formed in a lower portion of the welding bar 623a and bent toward the opposite current collecting plate 625, and an insertion tip 623c formed at an end portion of the bent bar 623b. The bent bar 623b is inclined in a direction to the outside from the center of the electrode assembly 10 to which the welding bar 623b is attached, and may be inclined with an angle of about 5° to 90° . The insertion tip 623c is formed at an end portion of the bent bar 623b and separated from the positive electrode uncoated region 11a. Thus, a distance between two facing insertion tips 623c is smaller than a distance between facing welding bars 623a. However, the insertion tip 623c is disposed further inside than the interface between the electrode assemblies 10 so that the facing insertion tips 625c do not contact.

Thus, the current collecting member 62 can be easily inserted between the electrode assemblies 10 without causing damage to the positive electrode uncoated region 11a because the insertion is performed while the insertion tip 623c is being separated from the positive electrode uncoated region 11a.

Further, since the welding bar 623a is designed to be closely attached to the positive electrode uncoated region 11a, the insertion tip 623c is inserted while being separated from the positive electrode uncoated region 11a when the welding bar 623a presses the positive electrode uncoated region 11a so that the current collecting member 62 can be easily inserted. As described, when the current collecting member 62 is provided in a manner that makes the welding bar 623a press the positive electrode uncoated region 11 a, the welding bar 623a and the positive electrode uncoated region 11a are closely attached to each other so that a contact failure between the current collecting member 62 and the positive electrode uncoated region 11a due to external impact or vibration can be prevented.

The current collecting plates 625 are formed in the shape of a long square plate, and includes a welding bar 625a welded to a positive electrode uncoated region 11a, a bent bar 625b formed in a lower portion of the welding bar 625a and bent toward the opposite current collecting plate 623, and an insertion tip 625c formed at an end portion of the bent bar 625b. The bent bar 625b is inclined in a direction to the outside from the center of the electrode assembly 10 to which the welding bar 625b is attached, and may be inclined with an angle of about 5° to 90°. The insertion tip 625c is formed at an end portion of the bent bar 625b and separated in the positive electrode uncoated region 11a. Thus, a distance between two facing insertion tips 625c is smaller than a distance between facing welding bars 625a. However, the insertion tip 625c is disposed further inside than the interface between the electrode assemblies 10 so that the facing insertion tips 623c do not contact.

Thus, the current collecting member 62 can be easily inserted between the electrode assemblies 10 without causing damage to the positive electrode uncoated region 11a because the insertion is performed while the insertion tip 625c is being separated from the positive electrode uncoated region 11a.

Further, since the welding bar 625a is designed to be closely attached to the positive electrode uncoated region 11a, the insertion tip 625c is inserted while being separated from the positive electrode uncoated region 11a when the welding bar 625a presses the positive electrode uncoated region 11a so that the current collecting member 62 can be easily inserted. As described, when the current collecting member 62 is provided in a manner that makes the welding bar 625a press the positive electrode uncoated region 11 a, the welding bar 625a and the positive electrode uncoated region 11a are closely attached to each other so that a contact failure between the current collecting member 62 and the positive electrode uncoated region 11a due to external impact or vibration can be prevented.

The supporting portion 626 is formed in upper portions of the current collecting plates 623 and 625 for connection therebetween in a fixed manner and the supporting portion 628 is formed in lower portions of the current collecting plates 623 and 625 for connection therebetween in a fixed manner. Here, the supporting portions 626 and 628 are respectively provided in upper and lower portions of the welding bars 623a and 625a.

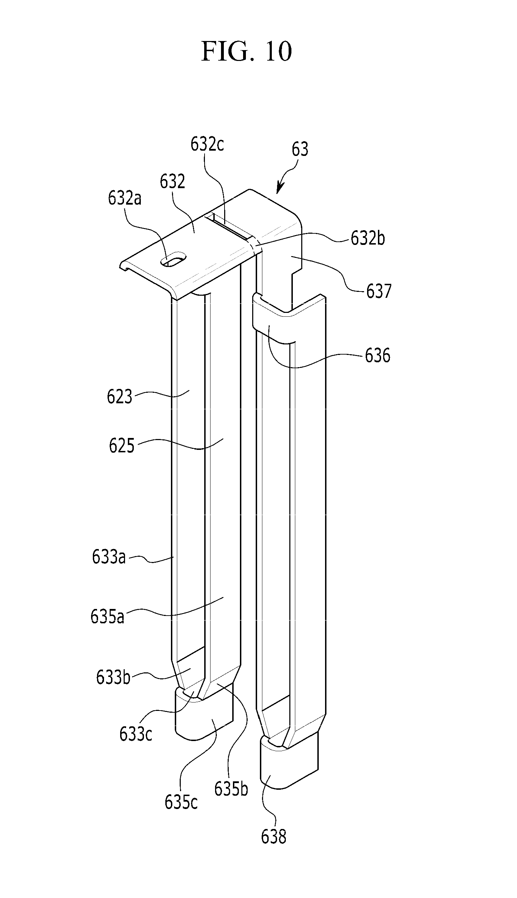

FIG. 10 is a perspective view of a current collecting member of a rechargeable battery according to a fifth exemplary embodiment of the present invention.

The rechargeable battery according to the present exemplary embodiment is the same as the rechargeable battery of the first exemplary embodiment of the present invention, excluding a structure of a current collecting member 63, and therefore no repeated description will be provided.

Referring to FIG. 10, the current collecting member 63 includes a terminal connection portion 632 fixed to a positive terminal 21, side plates 637 formed by being bent from the terminal connection portion 632, and current collecting plates 633 and 635 fixed to a positive electrode uncoated region 11a. In the terminal connection portion 632, a fuse portion 632b having a smaller width than the periphery region is formed.

The current collecting member provided in a negative terminal 22 is the same as the current collecting member 63 in structure, excluding the fuse portion 632b, and therefore no repeated description will be provided.

The terminal connection portion 632 is formed in the shape of a square plate, and a hole 632a to which the positive terminal 21 is inserted in formed in a center of the terminal connection portion 632. Further, the terminal connection portion 632 is welded to a lower portion of the positive terminal 21. The fuse portion 632b has a smaller width than the periphery region, and thus a hole 632c is formed in the fuse portion 632b. The hole 63c is extended in a width direction of the terminal connection portion 632. Ends of lateral sides the terminal connection portion 632 are bent downward such that the terminal connection portion 632 has an arc-shaped cross-section and portions protruding downward are formed in the ends of the lateral sides of the terminal connection portion 632. The hole 632c is formed in a center of the terminal connection portion 632, and the protruded portions are also formed in the fuse portion 632b.

Meanwhile, each side plate 637 is perpendicularly curved toward the bottom of the case 30 from a width directional end of the terminal connection portion 632. Thus, each side plate 637 is disposed in parallel with a wide front side of the case 30.

That is, each side plate 637 is bent at a corner formed by being extended along a direction that crosses the direction along which the fuse portion 632b is extended. The direction along which the fuse portion 632b is extended and the corner where then each side plate 637 is bent may be perpendicularly crossed.

When each side plate 637 is bent at a length directional end of the terminal connection portion 632, vertical directional stress applied to the fuse portion 632b is increased so that the fuse portion 632b may be broken due to vibration or impact.

However, when each side plate 637 is formed in the width directional end of the terminal connection portion 632 as in the present exemplary embodiment, the stress applied to the fuse portion 632b is decreased and thus the thickness of the fuse portion 632b can be reduced so that the fuse portion 632b can be activated with a small amount of current.

A current collecting plate 635 is formed by being extended from a lower portion of each side plate 637, and a current collecting plate 633 is fixed to the current collecting plate 635 using supporting portions 636 and 638.

The current collecting plates 633 are formed in the shape of a long square plate, and includes a welding bar 633a welded to a positive electrode uncoated region 11a, a bent bar 633b formed in a lower portion of the welding bar 633a and bent toward the opposite current collecting plate 635, and an insertion tip 633c formed at an end portion of the bent bar 633b. The bent bar 633b is inclined in a direction to the outside from the center of the electrode assembly 10 to which the welding bar 633b is attached, and may be inclined with an angle of about 5° to 90°. The insertion tip 633c is formed at an end portion of the bent bar 633b and separated in the positive electrode uncoated region 11a. Thus, a distance between two facing insertion tips 633c is smaller than a distance between facing welding bars 633a. However, the insertion tip 633c is disposed further inside than the interface between the electrode assemblies 10 so that the facing insertion tips 633c do not contact.

Thus, the current collecting member 63 can be easily inserted between the electrode assemblies 10 without causing damage to the positive electrode uncoated region 11a because the insertion is performed while the insertion tip 633c is being separated from the positive electrode uncoated region 11a.

Further, since the welding bar 633a is designed to be closely attached to the positive electrode uncoated region 11a, the insertion tip 633c is inserted while being separated from the positive electrode uncoated region 11a when the welding bar 633a presses the positive electrode uncoated region 11a so that the current collecting member 63 can be easily inserted. As described, when the current collecting member 63 is provided in a manner that makes the welding bar 633a press the positive electrode uncoated region 11 a, the welding bar 633a and the positive electrode uncoated region 11a are closely attached to each other so that a contact failure between the current collecting member 63 and the positive electrode uncoated region 11a due to external impact or vibration can be prevented.

The current collecting plates 635 are formed in the shape of a long square plate, and includes a welding bar 635a welded to a positive electrode uncoated region 11a, a bent bar 635b formed in a lower portion of the welding bar 635a and bent toward the opposite current collecting plate 633, and an insertion tip 635c formed at an end portion of the bent bar 635b. The bent bar 635b is inclined in a direction to the outside from the center of the electrode assembly 10 to which the welding bar 635b is attached, and may be inclined with an angle of about 5° to 90°. The insertion tip 635c is formed at an end portion of the bent bar 635b and separated in the positive electrode uncoated region 11a. Thus, a distance between two facing insertion tips 635c is smaller than a distance between facing welding bars 635a. However, the insertion tip 635c is disposed further inside than the interface between the electrode assemblies 10 so that the facing insertion tips 633c do not contact.

Thus, the current collecting member 63 can be easily inserted between the electrode assemblies 10 without causing damage to the positive electrode uncoated region 11a because the insertion is performed while the insertion tip 635c is being separated from the positive electrode uncoated region 11a.

Further, since the welding bar 635a is designed to be closely attached to the positive electrode uncoated region 11a, the insertion tip 635c is inserted while being separated from the positive electrode uncoated region 11a when the welding bar 635a presses the positive electrode uncoated region 11a so that the current collecting member 63 can be easily inserted. As described, when the current collecting member 63 is provided in a manner that makes the welding bar 635a press the positive electrode uncoated region 11 a, the welding bar 635a and the positive electrode uncoated region 11a are closely attached to each other so that a contact failure between the current collecting member 63 and the positive electrode uncoated region 11a due to external impact or vibration can be prevented.

The supporting portion 636 is formed in upper portions of the current collecting plates 633 and 635 for connection therebetween in a fixed manner and the supporting portion 638 is formed in lower portions of the current collecting plates 633 and 635 for connection therebetween in a fixed manner. Here, the supporting portion 636 is fixed to upper portions of the welding bars 623a and 625a, and the supporting portion 638 is fixed to the insertion tips 633c and 635c.

The invention has been described with embodiments showing four electrode assemblies. However, the invention is not limited to this number. The current collecting members shown can be adopted to any number of electrode assemblies.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery (101) comprising:
a plurality of electrode assemblies (10) each comprising a first electrode (11), a second electrode (12), and a separator (13) interposed between the first and second electrodes (11, 12), each electrode (11, 12) having a coated and an uncoated region (11a, 12a);
a case (30) for mounting the plurality of electrode assemblies (10) therein;
a cap plate (25) for closing an opening in the case (30);
a first terminal (21) protruding through the cap plate (25) and being electrically coupled to a first current collecting member (51);
the first current collecting member (51) mechanically and electrically coupling each first electrode (11) of the plurality of electrode assemblies (10) to the first terminal (21);
the first current collecting member (51) further comprises:
a plurality of current collecting plates (513, 515), each current collecting plate (513, 515) being fixed to an uncoated region (11 a) of one of the plurality of first electrodes (11), and
a plurality of supporting portions (516) connecting neighboring current collecting plates (513, 515),
**characterized in that**
the first current collecting member (51) comprises
a terminal connection portion (512) comprising a fuse portion (512b) and
side plates (517) being bent downwards from lateral sides of the terminal connection portion (512) and electrically coupling the plurality of current collecting plates (513, 515) to the first terminal (21).

2. The rechargeable battery (101) of claim 1, the side plates (517) extend from the lateral sides which are formed by being extended along a direction that crosses a width direction along which the fuse portion is extended.

3. The rechargeable battery (101) of claim 2, wherein the side, where one of the side plates (517) is bent from, is disposed at an end of the fuse portion (512b) and/or wherein a protruded portion of the fuse portion and one of the side plates (517) overlap.

4. The rechargeable battery (101) of one of the previous claims, wherein a first current collecting plate (515) extends from the end of the bent portion of each of the side plates (517).

5. The rechargeable battery (101) of claim 4, wherein a second current collecting plate (513) is connected to the first current collecting plate (515) via at least one supporting portion (516, 518), preferably two supporting portions (516, 518).

6. The rechargeable battery (101) of claim 5, wherein a first supporting portion (516) is formed in an upper portion of the first current collecting plate (515) and/or a second supporting portion (518) is formed in the lower portion of the first current collecting plate (515).

7. The rechargeable battery (101) of claims 5 or 6, wherein the supporting portion (516) comprises:
a connection portion (516a) extending from a side surface of the first current collecting member (515) facing away from the plurality of electrode assemblies (10); and
a guiding portion (516b) formed extending from the connection portion (516a) to the second current collecting plate (513).

8. The rechargeable battery (101) of claim 7, wherein each first electrode (11) comprises an inclined surface (10a) between its uncoated (11 a) and its coated region, the guiding portion (516b) being in physical contact with the inclined surface (10a).

9. The rechargeable battery (101) of claim 8, wherein the guiding portions (616b) are inclined with respect to the connection portion (616a) to closely attach to the inclined surface (10a).

10. The rechargeable battery (101) of any of the previous claims, wherein a current collecting plate (623) has a stepped profile with a welding bar (623a) and a bent bar (623b) formed at a lower end of welding bar (623a) and being inclined with respect to the welding bar (623a), and an insertion tip (623c) formed at an end portion of the bent bar (623b) such that the insertion tip (623c) is not in contact with the first electrode (11).

11. The rechargeable battery (101) of claim 10, wherein the bent bar (623b) is inclined with an angle between 5° and 90° with respect to welding bar (623a).

12. The rechargeable battery (101) of claims 11, wherein the shortest distance between two adjacent welding bars (623a) is greater than the shortest distance between two adjacent insertion tips (623c).

13. The rechargeable battery (101) of any of claims 10 to 12, wherein a supporting portion (638) connects two adjacent insertion tips (623c).

14. The rechargeable battery (101) of any of the previous claims, wherein insulating members (55, 57) are attached to portions of the first current collecting member (51) facing the inside of the case (30).

15. The rechargeable battery (101) of any of the previous claims, wherein each of the side plates (517) comprises a protrusion (56) such that the width of the side plate (517) is larger than the width of the current collecting plates (513, 515).

## Patentansprüche

1. Wiederaufladbare Batterie (101), umfassend:
eine Vielzahl von Elektrodenanordnungen (10), jeweils umfassend eine erste Elektrode (11), eine zweite Elektrode (12) und ein Trennelement (13), das zwischen der ersten und der zweiten Elektrode (11, 12) angeordnet ist, wobei jede Elektrode (11, 12) einen beschichteten und einen unbeschichteten Bereich (11a, 12a) aufweist;
ein Gehäuse (30) zum Befestigen der Vielzahl von Elektrodenanordnungen (10) darin;
eine Abdeckplatte (25) zum Verschließen einer Öffnung in dem Gehäuse (30);
einen ersten Anschluss (21), der aus der Abdeckplatte (25) herausragt und elektrisch mit einem ersten Stromsammelelement (51) verbunden ist;
das erste Stromsammelelement (51), das mechanisch und elektrisch jede erste Elektrode (11) aus der Vielzahl von Elektrodenanordnungen (10) mit dem ersten Anschluss (21) verbindet;
wobei das erste Stromsammelelement (51) weiterhin umfasst:
eine Vielzahl von Stromsammelplatten (513, 515), wobei jede Stromsammelplatte (513, 515) an einem unbeschichteten Bereich (11a) von einer aus der Vielzahl erster Elektroden (11) befestigt ist, und
eine Vielzahl von Halterungsteilen (516), welche die benachbarten Stromsammelplatten (513, 515) verbinden,
**dadurch gekennzeichnet, dass**
das erste Stromsammelelement (51) umfasst:
einen Anschlussverbindungsteil (512), das einen Sicherungsteil (512b) und
Seitenplatten (517) aufweist, die von den Seiten des Anschlussverbindungsteils (512) nach unten gebogen sind und die Vielzahl von Stromsammelplatten (513, 515) mit dem ersten Anschluss (21) verbinden.

2. Wiederaufladbare Batterie (101) nach Anspruch 1, wobei sich die Seitenplatten (517) von den Seiten aus erstrecken, die dadurch ausgebildet werden, indem sie in einer Richtung verlaufen, welche eine Breitenrichtung kreuzt, entlang der sich der Sicherungsteil erstreckt.

3. Wiederaufladbare Batterie (101) nach Anspruch 2, wobei die Seite, von der aus eine der Seitenplatten (517) umgebogen ist, an einem Ende des Sicherungsteils (512b) angeordnet ist und/oder wobei sich ein hervorstehender Teil des Sicherungsteils und eine der Seitenplatten (517) überlappen.

4. Wiederaufladbare Batterie (101) nach einem der vorangehenden Ansprüche, wobei sich eine erste Stromsammelplatte (515) vom Ende des gebogenen Teils von jeder der Seitenplatten (517) erstreckt.

5. Wiederaufladbare Batterie (101) nach Anspruch 4, wobei eine zweite Stromsammelplatte (513) über wenigstens einen Halterungsteil (516, 518), vorzugsweise zwei Halterungsteile (516, 518), mit der ersten Stromsammelplatte (515) verbunden ist.

6. Wiederaufladbare Batterie (101) nach Anspruch 5, wobei ein erster Halterungsteil (516) in einem oberen Teil der ersten Stromsammelplatte (515) und/oder ein zweiter Halterungsteil (518) im unteren Teil der ersten Stromsammelplatte (515) ausgebildet ist/sind.

7. Wiederaufladbare Batterie (101) nach Anspruch 5 oder 6, wobei der Halterungsteil (516) umfasst:
einen Verbindungsteil (516a), der sich von einer Seitenfläche des ersten Stromsammelelements (515) ausgehend und von der Vielzahl von Elektrodenanordnungen (10) abgewandt erstreckt; und
einen Führungsteil (516b), der so ausgebildet ist, dass er sich vom Verbindungsteil (516a) zur zweiten Stromsammelplatte (513) erstreckt.

8. Wiederaufladbare Batterie (101) nach Anspruch 7, wobei jede erste Elektrode (11) eine geneigte Fläche (10a) zwischen ihrem unbeschichteten (11a) und ihrem beschichteten Bereich aufweist, wobei der Führungsteil (516b) physisch mit der geneigten Fläche (10a) in Kontakt ist.

9. Wiederaufladbare Batterie (101) nach Anspruch 8, wobei die Führungsteile (616b) zum Verbindungsteil (616a) geneigt sind, so dass sie eng an der geneigten Fläche (10a) anliegen.

10. Wiederaufladbare Batterie (101) nach einem der vorangehenden Ansprüche, wobei eine Stromsammelplatte (623) ein Stufenprofil mit einem Schweißstab (623a), einem gebogenen Stab (623b), der an einem unteren Ende des Schweißstabes (623a) ausgebildet und zum Schweißstab geneigt ist, und einer Einsteckspitze (623c) aufweist, die derart an einem Endteil des gebogenen Stabes (623b) ausgebildet ist, dass die Einsteckspitze (623c) nicht mit der ersten Elektrode (11) in Kontakt kommt.

11. Wiederaufladbare Batterie (101) nach Anspruch 10, wobei der gebogene Stab (623b) in einem Winkel von 5° bis 90° zum Schweißstab (623a) geneigt ist.

12. Wiederaufladbare Batterie (101) nach Anspruch 11, wobei der kürzeste Abstand zwischen zwei benachbarten Schweißstäben (623a) größer ist als der kürzeste Abstand zwischen zwei angrenzenden Einsteckspitzen (623c).

13. Wiederaufladbare Batterie (101) nach einem der Ansprüche 10 bis 12, wobei ein Halterungsteil (638) zwei angrenzende Einsteckspitzen (623c) miteinander verbindet.

14. Wiederaufladbare Batterie (101) nach einem der vorangehenden Ansprüche, wobei Isolierelemente (55, 57) an Teilen des ersten, zur Innenseite des Gehäuses (30) weisenden Stromsammelelements (51) angebracht sind.

15. Wiederaufladbare Batterie (101) nach einem der vorangehenden Ansprüche, wobei jede der Seitenplatten (517) einen Vorsprung (56) derart umfasst, dass die Breite der Seitenplatte (517) größer ist als die Breite der Stromsammelplatten (513, 515).

## Revendications

1. Batterie rechargeable (101) comprenant :
une pluralité d'ensembles d'électrodes (10) comprenant chacun une première électrode (11), une seconde électrode (12) et un séparateur (13) intercalé entre les première et seconde électrodes (11, 12), chaque électrode (11, 12) ayant une région recouverte et une région non recouverte (11a, 12a) ;
un boîtier (30) pour monter la pluralité d'ensembles d'électrodes (10) à l'intérieur de ce dernier ;
une plaque de capuchon (25) pour fermer une ouverture dans le boîtier (30) ;
une première borne (21) faisant saillie à travers la plaque de capuchon (25) et étant électriquement couplée à un premier élément de collecte de courant (51) ;
le premier élément de collecte de courant (51) couplant mécaniquement et électriquement chaque première électrode (11) de la pluralité d'ensembles d'électrodes (10) à la première borne (21) ;
le premier élément de collecte de courant (51) comprend en outre :
une pluralité de plaques de collecte de courant (513, 515), chaque plaque de collecte de courant (513, 515) étant fixée sur une région non recouverte (11a) de l'une de la pluralité de premières électrodes (11), et
une pluralité de parties de support (516) raccordant des plaques de collecte de courant (513, 515) voisines,
**caractérisée en ce que**
le premier élément de collecte de courant (51) comprend
une partie de connexion de borne (512) comprenant une partie de fusible (512b) et
des plaques latérales (517) qui sont pliées vers le bas à partir des côtés latéraux de la partie de connexion de borne (512) et couplant électriquement la pluralité de plaques de collecte de courant (513, 515) à la première borne (21).

2. Batterie rechargeable (101) selon la revendication 1, les plaques latérales (517) s'étendent à partir des côtés latéraux qui sont formés en étant étendus le long d'une direction qui traverse une direction de largeur le long de laquelle la partie de fusible est étendue.

3. Batterie rechargeable (101) selon la revendication 2, dans laquelle le côté à partir duquel l'une des plaques latérales (517) est pliée, est disposé au niveau d'une extrémité de la partie de fusible (512b) et/ou dans laquelle une partie en saillie de la partie de fusible et l'une des plaques latérales (517) se chevauchent.

4. Batterie rechargeable (101) selon l'une des revendications précédentes, dans laquelle une première plaque de collecte de courant (515) s'étend à partir de l'extrémité de la partie pliée de chacune des plaques latérales (517).

5. Batterie rechargeable (101) selon la revendication 4, dans laquelle une seconde plaque de collecte de courant (513) est raccordée à la première plaque de collecte de courant (515) via au moins une partie de support (516, 518), de préférence deux parties de support (516, 518).

6. Batterie rechargeable (101) selon la revendication 5, dans laquelle une première partie de support (516) est formée dans une partie supérieure de la première plaque de courant (515) et/ou une seconde partie de support (518) est formée dans la partie inférieure de la première plaque de collecte de courant (515).

7. Batterie rechargeable (101) selon les revendications 5 ou 6, dans laquelle la partie de support (516) comprend :
une partie de raccordement (516a) s'étendant à partir d'une surface latérale du premier élément de collecte de courant (515) orientée à l'opposé de la pluralité d'ensembles d'électrodes (10) ; et
une partie de guidage (516b) formée en s'étendant à partir de la partie de connexion (516a) jusqu'à la seconde plaque de collecte de courant (513).

8. Batterie rechargeable (101) selon la revendication 7, dans laquelle chaque première électrode (11) comprend une surface inclinée (10a) entre sa région non recouverte (11a) et sa région recouverte, la partie de guidage (516b) étant en contact physique avec la surface inclinée (10a).

9. Batterie rechargeable (101) selon la revendication 8, dans laquelle les parties de guidage (616b) sont inclinées par rapport à la partie de raccordement (616a) pour se fixer étroitement à la surface inclinée (10a).

10. Batterie rechargeable (101) selon l'une quelconque des revendications précédentes, dans laquelle une plaque de collecte de courant (623) a un profil étagé avec une barre de soudage (623a) et une barre pliée (623b) formée au niveau d'une extrémité inférieure de la barre de soudage (623a) et étant inclinée par rapport à la barre de soudage (623a) et une pointe d'insertion (623c) formée à partir d'une partie d'extrémité de la barre pliée (623b) de sorte que la pointe d'insertion (623c) n'est pas en contact avec la première électrode (11).

11. Batterie rechargeable (101) selon la revendication 10, dans laquelle la barre pliée (623b) est inclinée avec un angle compris entre 5° et 90° par rapport à la barre de soudage (623a).

12. Batterie rechargeable (101) selon la revendication 11, dans laquelle la plus courte distance entre deux barres de soudage (623a) adjacentes est supérieure à la plus courte distance entre deux pointes d'insertion (623c) adjacentes.

13. Batterie rechargeable (101) selon l'une quelconque des revendications 10 à 12, dans laquelle une partie de support (638) raccorde deux pointes d'insertion (623c) adjacentes.

14. Batterie rechargeable (101) selon l'une quelconque des revendications précédentes, dans laquelle des éléments isolants (55, 57) sont fixés aux parties du premier élément de collecte de courant (51) faisant face à l'intérieur du boîtier (30).

15. Batterie rechargeable (101) selon l'une quelconque des revendications précédentes, dans laquelle chacune des plaques latérales (517) comprend une saillie (56) de sorte que la largeur de la plaque latérale (517) est plus grande que la largeur des plaques de collecte de courant (513, 515).
